Europäisches Patentamt

European Patent Office

Office européen des brevets

(19)

(11) **EP 0 708 342 A2**

(12) **EUROPÄISCHE PATENTANMELDUNG**

(43) Veröffentlichungstag:
24.04.1996 Patentblatt 1996/17

(51) Int. Cl.[6]: **G01S 13/28**, G01S 13/10

(21) Anmeldenummer: 95114458.3

(22) Anmeldetag: 14.09.1995

(84) Benannte Vertragsstaaten:
**DE ES FR GB IT**

(30) Priorität: **22.09.1994 DE 4433790**

(71) Anmelder: **Daimler-Benz Aktiengesellschaft**
**D-70546 Stuttgart (DE)**

(72) Erfinder:
• **Schneider, Robert**
**D-89233 Neu-Ulm (DE)**

• **Wanielik, Gerd**
**D-89079 Ulm (DE)**
• **Wenger, Josef**
**D-89250 Senden (DE)**

(74) Vertreter: **Weber, Gerhard, Dipl.-Phys.**
**AEG Aktiengesellschaft**
**60591 Frankfurt (DE)**

(54) **Puls-Radarverfahren**

(57) Für ein Puls-Radarverfahren wird vorgeschlagen, mehrere verschiedene Sendefrequenzen zu benutzen und die Empfangssignale auf eine einheitliche Zwischenfrequenz umzusetzen. Die in mehreren Entfernungstoren entsprechend einer ersten groben Entfernungsauflösung gewonnenen Abtastwerte werden entfernungstorweise aus den verschiedenen Sendefrequenzen zusammengefaßt und einer Frequenz-Zeit-Transformation unterzogen. Dadurch ergibt sich eine höhere Entfernungsauflösung. Überlagerungen durch Empfang von Signalen zu jeweils anderen Sendefrequenzen oder anlagenfremden Signalen können durch die Umsetzung auf die feste Zwischenfrequenz in Verbindung mit einer angemessenen Filterdurchlaßbandbreite wirkungsvoll unterdrückt werden.

Fig. 1

**Beschreibung**

Die Erfindung betrifft ein Puls-Radarverfahren nach dem Oberbegriff des Patentanspruchs 1.

Zur Bestimmung der Zielentfernung wird bei einem Puls-Radarverfahren das Empfangssignal in einem vorgebbaren Zeitraster abgetastet, was einer Unterteilung des Überwachungsbereichs in Entfernungstore (Rangegates) entspricht. Vorzugsweise wird das Empfangssignal mittels eines Lokaloszillator (LO)-Signals ins Basisband oder in eine Zwischenfrequenzlage umgesetzt. Die Entfernungsauflösung ist insbesondere durch die Abtasteinrichtungen beschränkt. Eine Steigerung der Abtastfrequenz ist mit schnell steigenden Kosten und Aufwand verbunden.

Aufgabe der vorliegenden Erfindung ist es, bei einem Puls-Radarverfahren mit geringem Aufwand eine verbesserte Entfernungsauflösung zu erreichen.

Die Erfindung ist im Patentanspruch 1 beschrieben. Die Unteransprüche enthalten vorteilhafte Ausgestaltungen und Weiterbildungen der Erfindung.

Die Erfindung führt zu einer höheren Entfernungsauflösung, ohne die Abtastrate zu steigern. Geringer Zusatzaufwand ergibt sich lediglich durch eine modifizierte Steuerung eines die Sendefrequenz und die LO-Frequenz generierenden Oszillators und durch eine ergänzende Signalverarbeitung im digitalen Empfängerteil.

Darüberhinaus kann durch die Frequenzstaffelung in Verbindung mit einer ausreichend schmalen Zwischenfrequenz-Filterung die Pulsfolgefrequenz ohne Störeinflüsse durch Überreichweitenechos erhöht werden. Die Pulsfolgefrequenz kann weiter erhöht werden, wenn nur ein Entfernungsabschnitt innerhalb des Überwachungsbereichs höher aufgelöst werden soll. Schließlich kann durch eine Variation der Reihenfolge der unterschiedlichen Frequenzen in Verbindung mit einer Zwischenfrequenzfilterung die Störsicherheit gegen Sendeimpulse fremder Radaranordnungen, insbesondere beim Einsatz in Kraftfahrzeug-Abstandswarnradar-Anlagen gegen Sendesignale entgegenkommender Fahrzeuge, verbessert werden.

Die Erfindung ist nachfolgend an bevorzugten Ausführungsbeispielen unter Bezugnahme auf die Abbildungen noch eingehend veranschaulicht.

Der Übersichtlichkeit halber sind die skizzierten Beispiele auf drei verschiedene Sendefrequenzen beschränkt.

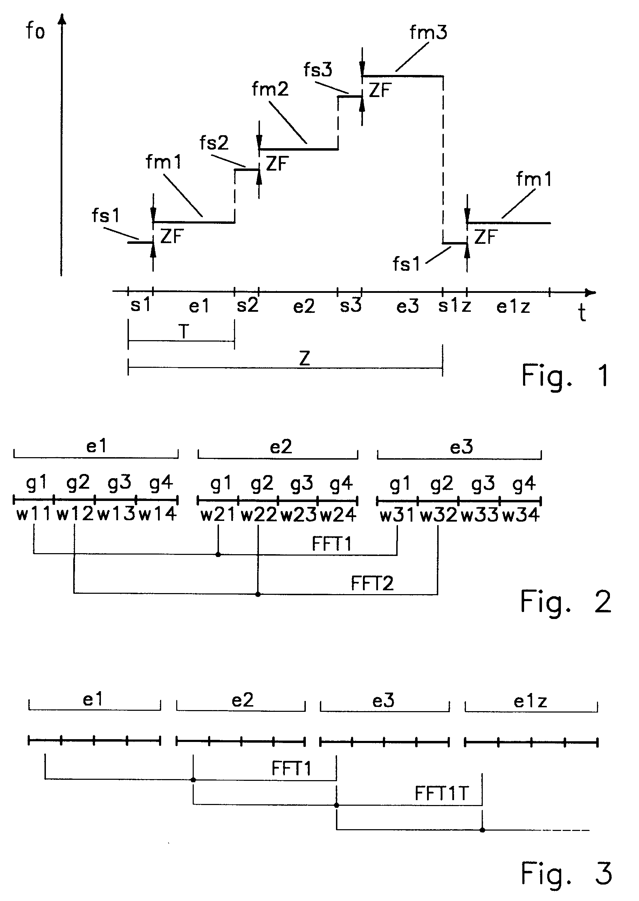

In FIG. 1 sind über einer Zeitachse t Oszillatorfrequenzen fo für die Sendepulse und die Überlagerungssignale (LO) aufgetragen. Die Zeitachse ist in Sendeabschnitte S1, S2,... und Empfangsabschnitte e1, e2... unterteilt. Umschaltzeiten für den Wechsel zwischen Sendeabschnitten und Empfangsabschnitten sowie Frequenzumschaltzeiten sind nicht berücksichtigt. Vorzugsweise werden die verschiedenfrequenten Signale alle in einer steuerbar frequenzvariablen Oszillatoranordnung erzeugt.

Während eines ersten Sendeabschnittes S1 innerhalb eines Zyklus Z wird ein Sendepuls der ersten Sendefrequenz fs1 abgestrahlt. An diesen ersten Sendeabschnitt schließt sich ein erster Empfangsabschnitt e1 an, während dessen die hochfrequenten Empfangssignale mit einer ersten LO-Frequenz fm1 in eine Zwischenfrequenzlage umgesetzt werden. Diese erste LO-Frequenz fm1 ist um die Zwischenfrequenz ZF gegen die erste Sendefrequenz versetzt ($|fm1 - fs1| = ZF$). Ein Zyklus Z umfaßt mehrere solcher Sende-Empfangs-Abschnitte S1/e1, S2/e2, S3/e3 mit unterschiedlichen Sendefrequenzen fs1, fs2, fs3 und mehreren LO-Frequenzen fm1, fm2, fm3, die jeweils so gewählt sind, daß $|fm1-fs1| = |fm2-fs2| = |fm3-fs3| = ZF$.

Die Sendeimpulse folgen aufeinander mit einer Pulswiederholzeit T. Vorteilhafterweise setzt sich der Zyklus Z periodisch fort mit einem Sendepuls der Frequenz fs1 in einem neuen Sendeabschnitt s1Z, einem Empfangsabschnitt e1Z mit einer LO-Frequenz fm1 usw.

In FIG. 2 ist für einen Zyklus Z mit Empfangsabschnitten e1, e2, e3 nach FIG. 1 eine Unterteilung in Entfernungstore g1, g2, g3, g4 entsprechend vier Abtastintervallen in jedem Empfangsabschnitt skizziert. Die in den einzelnen Empfangsabschnitten und jeweiligen Entfernungstoren gewonnenen komplexen Abtastwerte sind mit wik bezeichnet, wobei i für die Laufzahl der gestaffelten Sendefrequenzen und k für die Laufzahl der aufeinerfolgenden Entfernungstore steht.

Die Abtastwerte aus ein und demselben Entfernungstor, z.B. g1, zu verschiedenen Sendefrequenzen werden zu einer Wertegruppe wi1 = (w11, w21, w31) zusammengefaßt und einer Frequenz-Zeit-Transformation unterzogen. Vorzugsweise bilden die verschiedenen Sendefrequenzen ein mit $\Delta f = |fs2 - fs1| = |fs3 - fs2|$ äquidistantes Frequenzraster und wird die Transformation mittels einer Fast-Fourier-Transform FFT durchgeführt. Im Prinzip sind aber auch andere an sich bekannte Transformationen mit nicht äquidistantem Frequenzraster zur Anpassung an besondere Anforderungen einsetzbar.

Die sich aus der Transformation ergebende Wertegruppe im Zeitbereich entspricht einer Unterteilung des das Entfernungstor g1 repräsentierenden Zeitintervalls in mehrere Teilintervalle und ist gleichwertig einer Entfernungsunterteilung des Entfernungstores. Damit liegt die angestrebte höhere Entfernungsauflösung für das einer ersten groben Entfernungsauflösung entsprechende Entfernungstor g1 vor.

Eine entsprechende Transformation kann für andere oder alle Entfernungstore durchgeführt werden. Insbesondere kann eine erste Zieldetektion in groben Entfernungsschritten g1, g2, g3, g4 und nur in Entfernungstoren, in denen eine Zielentdeckungsschwelle überschritten wurde, eine höhere Entfernungsauflösung mittels einer Transformation durchgeführt werden. Im skizzierten Beispiel in FIG. 2 ist z.B. eine Transformation FFT1 für das Entfernungstor g1 und eine Transformation FFT2 für das Entfernungstor g2 vorgesehen. Für die grobe Entfernungsauflösung kann auch nur eine Sendefrequenz eingesetzt und dabei eine schnelle und über einen großen Bereich eindeutige Geschwindigkeitsschätzung mittels einer Dopplerverarbeitung durchgeführt werden.

Eine periodische Fortsetzung des Zyklus Z wie in FIG. 1 mit Sendeabschnitt s1Z und Empfangsabschnitt e1Z angedeutet ermöglicht vorteilhafterweise eine laufende Erneuerung der Transformation für ein ausgewähltes Entfernungstor in Zeitabständen T, wobei jeweils ein Abtastwert eines neuen Empfangsabschnitts e1Z den entsprechenden Abtastwert des letzten derselben Sendefrequenz zugeordneten Empfangsabschnitts e1 ersetzt.

In FIG. 3 ist eine erste Transformation FFT1 auf der Grundlage der Abtastwerte aus den Empfangsabschnitten e1, e2, e3, eine um T später durchzuführende zweite Transformation FFT1T auf der Grundlage der Abtastwerte aus Empfangsabschnitten e2, e3, e1Z usw. angedeutet. Für die Durchführung der Transformation ist dabei jeweils auf die Anordnung der Abtastwerte innerhalb der Wertegruppe nach gleichbleibender Reihenfolge der zugeordneten Sendefrequenzen zu achten.

Der Frequenzabstand von auf der Frequenzskala benachbarten Sendefrequenzwerten ist vorzugsweise in Verbindung mit der Durchlaßbandbreite einer Filterung in der Zwischenfrequenzlage so gewählt, daß die Filterung lediglich die Mischfrequenzen einer LO-Frequenz fmi mit den aus den zugeordneten Sendepulsen der um ZF frequenzversetzten Sendefrequenz fsi durchläßt und Mischfrequenzen mit allen anderen Sendefrequenzen ausblendet. Dadurch bleiben Störungen durch Überreichweitenreflexionen ausgeschlossen und die Pulsfolgefrequenz PRF = 1/T kann unmittelbar auf die gewünschte Reichweite des Überwachungsbereichs abgestimmt werden.

Eine Weiterbildung der Erfindung sieht vor, daß die zeitliche Reihenfolge der Suchfrequenzen abweicht von der Reihenfolge der Sendefrequenz auf der Frequenzskala. Hierdurch kann die Störanfälligkeit gegen Sendepulse fremder gleichartiger Radaranordnungen, insbesondere gegen Sendepulse entgegenkommender Fahrzeuge bei Kfz-Abstandswarnradaren, erheblich verringert werden. Zur Durchführung der Transformation sind die Abtastwerte dann zuvor nach der Reihenfolge der zugeordneten Sendefrequenzen zu sortieren. Die vorzugsweise variable Reihenfolge der Sendefrequenzen ist vorteilhafterweise eine periodisch wiederholte Permutation der sortierten Frequenzfolge. Fremde Sendepulse werden bei der Frequenzumsetzung mit der LO-Frequenz im Regelfall in einem außerhalb der ZF-Filterung liegenden Bereich abgemischt und ausgeblendet.

Mit dem erfindungsgemäßen Radarverfahren kann vorteilhafterweise für den Fall, daß nur in einem Entfernungsteilbereich des Überwachungsgebiets eine Erhöhung der Entfernungsauflösung gewünscht wird, auch eine Erhöhung der Pulswiederholfrequenz PRF über den der maximalen Entfernung der Überwachung entsprechenden Wert hinaus erreicht werden. Es sei dabei angenommen, daß der bei der Erläuterung der grundsätzlichen Vorgehensweise gemäß der Erfindung anhand der FIG. 1 und 2 durch Entfernungstore g1 bis g4 abgedeckte Bereich dem gesamten Überwachungsbereich bis zur maximalen Entfernung entspreche. Wenn nur ein Teil des gesamten Entfernungsbereichs für eine höhere Entfernungsauflösung interessant ist, beispielsweise auf der Grundlage eines vorhergehenden Zielentdeckungsschritts mit der ersten groben Entfernungsauflösung, so ergeben sich innerhalb der Empfangsabschnitte e1, e2... jeweils interessierende Intervalle, im folgenden Empfangsintervalle genannt und nicht weiter interessierende Intervalle. In letztere können Empfangsintervalle und Sendeabschnitte zu anderen Sendefrequenzen eingefügt werden, so daß eine zeitliche Verdichtung und damit eine Erhöhung der Pulswiederholfrequenz möglich ist.

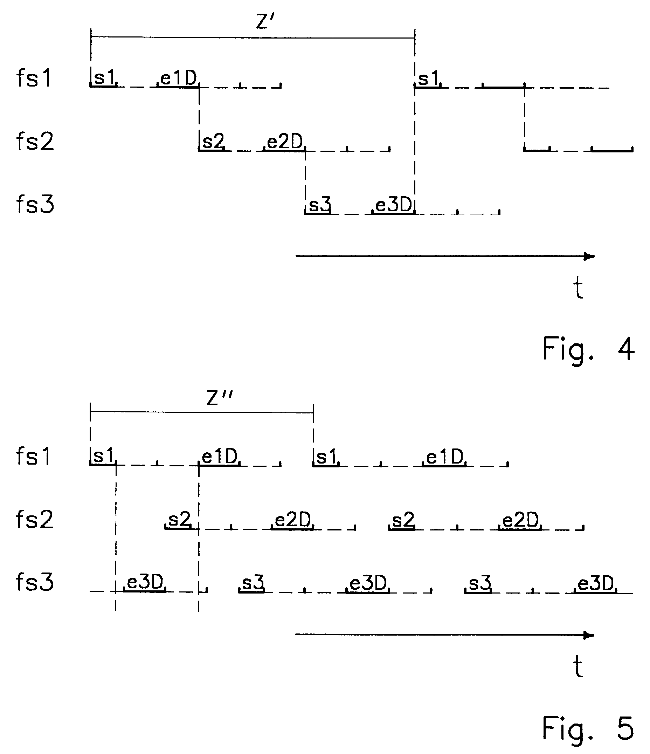

In FIG. 4 und FIG. 5 sind zwei mögliche Varianten einer solchen Erhöhung der PRF skizziert, bei einer Entfernungs- und Frequenzeinteilung wie in dem Beispiel nach FIG. 1 und 2. Die Darstellungsart ist gegenüber FIG. 1 insoweit vereinfacht, als keine Frequenzachse vorgesehen ist und jeweils Sendeabschnitte und zugehörige Empfangsintervalle innerhalb einer Zeile dargestellt sind mit verschiedenen Zeilen für unterschiedliche Sendefrequenzen.

Die Empfangsintervalle als Teilbereiche des gesamten Entfernungsbereichs sind mit e1D, e2D,... usw. bezeichnet. Die Empfangsintervalle sind definiert als Zeitintervalle, innerhalb derer die jeweils zugeordnete LO-Frequenz zur Verfügung gestellt wird.

In dem Beispiel nach FIG. 4 sei angenommmen, daß nach einer Zielentdeckung im Entfernungstor g2 nur dieser Teilentfernungsbereich höher aufgelöst werden soll. Da die Entfernungstore g3 und g4 nicht weiter von Interesse sind, kann der Sendeabschnitt s2 zur Sendefrequenz fs2 nach Ende des Empfangsintervalls e1D entsprechend dem Entfernungstor g2 zur Sendefrequenz fs1 beginnen. Entsprechendes gilt für den Beginn des Sendeabschnitts s3 nach Ende des Empfangsintervalls e2D, den Beginn eines nächsten Sendeabschnitts s1 zur Sendefrequenz fs1 nach Ende des Empfangsintervalls e3D usw. Die Sende-/Empfangsabschnitte zu den verschiedenen Sendefrequenzen rücken insgesamt zeitlich enger zusammen.

Im Beispiel nach FIG. 5 sei als weiter interessierender Teilentfernungsbereich lediglich das Entfernungstor g3 angenommen. Neben der zu FIG. 4 analogen Möglichkeit des Zusammenrückens von Sende-Empfangs-Abschnitten zu den einzelnen Sendefrequenzen bietet sich hier die Möglichkeit des Verschachtelns. In den zur Sendefrequenz fs1 nicht weiter interessierenden Zeitabschnitt zwischen s1 und g3 = e1D kann ein Empfangsabschnitt und ein Sendeabschnitt zu anderen Sendefrequenzen eingefügt werden, beispielsweise wie skizziert ein Empfangsintervall e3D zur Sendefrequenz fs3 und ein Sendeabschnitt s2 zur Sendefrequenz fs2. In gleicher Weise wird zwischen s2 und dem zugehörigen Empfangsintervall e2D ein Empfangsintervall e1D zu fs1 und ein Sendeabschnitt s3 zu fs3 und zwischen s3 und e3D im Empfangsintervall e2D und ein Sendeabschnitt s1 eingefügt.

Bei beiden Varianten gemäß FIG: 4 und FIG. 5 ergeben sich komprimierte Zykluslängen Z' bzw. Z", die wesentlich geringer sind als die fange eines vollständigen Zyklus nach FIG. 1 und dabei ist jeweils die gesamte gewünschte Information in Form von Abtastwerten aus den Empfangsintervallen e1D, e2D, e3D zu allen Sendefrequenzen enthalten. Bei den komprimierten Zykluslängen ist darauf zu achten, daß die Komprimierung nicht so weit geführt wird, daß Mehrdeutigkeiten durch Überreichweitenziele wieder von Bedeutung werden.

Gegenüber den skizzierten Beispielen mit aus Gründen der Übersichtlichkeit gewählten Beschränkungen hinsichtlich der Zahl der verschiedenen Sendefrequenzen und der Zahl der Entfernungstore ist in der Praxis bei einem Abstandswarnradar typischerweise auszugehen von 2 bis 16 verschiedenen Sendefrequenzen und 10 - 50 Entfernungstoren über einen Entfernungsbereich von 0 -150m. Die Sendefrequenzen liegen für solche Anwendungen vorzugsweise über 1GHz und die Sendepulslängen typischerweise bei 10 - 100nm.

## Patentansprüche

1. Puls-Radarverfahren, bei welchem die hochfrequenten Empfangssignale in eine Zwischenfrequenzlage umgesetzt werden, <u>dadurch gekennzeichnet,</u>

   - daß zeitsequentiell Sendepulse unterschiedlicher Sendefrequenzen abgestrahlt und die zugehörigen Empfangssignale in eine einheitliche Zwischenfrequenz umgesetzt werden
   - daß aus den umgesetzten Empfangssignalen jeweils mehrere Abtastwerte entsprechend mehreren Zielentfernungsabschnitten mit einer ersten Entfernungsauflösung gewonnen werden und
   - daß eine Gruppe von Abtastwerten eines einheitlichen Entfernungsabschnitts zu verschiedenen Sendefrequenzen einer Frequenz-Zeit-Transformation unterworfen wird.

2. Verfahren nach Anspruch 1, dadurch gekennzeichnet, daß die transformierten Werte als Wertefolge höherer Entfernungsauflösung innerhalb des betrachteten Entfernungsabschnitts der ersten Entfernungsauflösung weiterverarbeitet werden.

3. Verfahren nach Anspruch 1 oder Anspruch 2, dadurch gekennzeichnet, daß die mehreren Sendefrequenzen ein äquidistantes Frequenzraster bilden.

4. Verfahren nach Anspruch 3, dadurch gekennzeichnet, daß die Transformation mittels einer Fast-Fourier-Transform (FFT) durchgeführt wird.

5. Verfahren nach einem der Ansprüche 1 bis 4, dadurch gekennzeichnet, daß die umgesetzten Empfangssignale einer Filterung unterzogen werden mit einer Durchlaßbreite kleiner als der kleinste Frequenzabstand benachbarter unterschiedlicher Sendefrequenzen.

6. Verfahren nach Anspruch 5, dadurch gekennzeichnet, daß die Pulsfolgefrequenz höher gewählt wird als der maximalen Entfernung der Radarüberwachung entsprechend.

7. Verfahren nach Anspruch 5, dadurch gekennzeichnet, daß die zeitliche Reihenfolge unterschiedlicher Sendefrequenzen variabel ist.

8. Verfahren nach einem der vorhergehenden Ansprüche, dadurch gekennzeichnet, daß in einem vorhergehenden Detektionsmodus eine Zielentdeckung mit einer ersten Entfernungsauflösung durchgeführt wird.

Fig. 1

Fig. 2

Fig. 3

Fig. 4

Fig. 5